# EUROPÄISCHE PATENTSCHRIFT

(11) **EP 3 298 250 B1**
(45) Veröffentlichungstag und Bekanntmachung des Hinweises auf die Patenterteilung: **10.07.2019**
(21) Anmeldenummer: 16722054.0
(22) Anmeldetag: 12.05.2016
(51) Int. Cl.: F01L 1/46, F16C 17/02, F16C 17/04, F16H 53/02, F16C 33/10, F01L 1/047

(54) **BRENNKRAFTMASCHINE**
INTERNAL COMBUSTION ENGINE
MOTEUR À COMBUSTION INTERNE

(30) Priorität: 20.05.2015 DE 102015006375
(43) Veröffentlichungstag der Anmeldung: 28.03.2018
(73) Patentinhaber: Audi AG, 85045 Ingolstadt (DE)
(72) Erfinder: ORTMANN, Matthias, 41199 Mönchengladbach (DE)
(86) Internationale Anmeldenummer: PCT/EP2016/000785
(87) Internationale Veröffentlichungsnummer: WO 2016/184557

(56) Entgegenhaltungen:
- DE-A1-102012 016 674
- JP-A- 2005 090 696

## Beschreibung

Die Erfindung betrifft eine Brennkraftmaschine mit wenigstens einer Nockenwelle sowie einem Lagerbock zur drehbeweglichen Lagerung der Nockenwelle um eine Drehachse, wobei zur Axiallagerung der Nockenwelle ein Axiallagerelement vorgesehen ist, das in eine Axiallagernut des Lagerbocks eingreift, wobei das Axiallagerelement einen beidseitig eines Haltevorsprungs vorliegenden Stützkörper aufweist, wobei der Haltevorsprung von dem Stützkörper ausgeht und in eine eine Außenumfangsfläche der Nockenwelle durchgreifende Halteausnehmung eingreift, sodass das Axiallagerelement drehfest mit der Nockenwelle verbunden ist, wobei der Stützkörper in die in Umfangsrichtung bezüglich der Drehachse umlaufende Axiallagernut des Lagerbocks eingreift.

Die Brennkraftmaschine dient dem Bereitstellen eines Drehmoments. Sie verfügt über mehrere Zylinder, in welchen jeweils ein Kolben längsbeweglich angeordnet ist. Jedem Zylinder ist wenigstens ein Gaswechselventil zugeordnet, welches mittels der Nockenwelle betätigt wird. Das Gaswechselventil kann beispielsweise als Gaseinlassventil oder als Gasauslassventil vorliegen. Vorzugsweise verfügt die Brennkraftmaschine über mehrere Nockenwellen, wobei eine der Nockenwellen zur Betätigung von Gaseinlassventilen und eine andere der Nockenwellen zur Betätigung von Gasauslassventilen der Brennkraftmaschine vorgesehen ist. Nachfolgend wird lediglich auf eine Nockenwelle eingegangen, die Ausführungen sind jedoch selbstverständlich auch auf andere Nockenwellen der Brennkraftmaschine übertragbar.

Die Nockenwelle ist Bestandteil eines Ventiltriebs. Dieser kann als variabler Ventiltrieb ausgestaltet sein, wozu vorzugsweise die Nockenwelle als Grundnockenwelle ausgestaltet ist, auf welcher wenigstens ein in axialer Richtung - bezüglich einer Drehachse der Nockenwelle - verlagerbarer Nockenträger angeordnet ist. Zum Verlagern des Nockenträgers ist eine Aktuatorik vorgesehen. Der Nockenträger umfasst wenigstens zwei Nocken, wobei in einer ersten Stellung des Nockenträgers ein erster der Nocken zur Betätigung des Gaswechselventils und in einer von der ersten Stellung verschiedenen zweiten Stellung ein zweiter der Nocken zur Betätigung des jeweiligen Gaswechselventils angeordnet ist.

Zur Lagerung der Nockenwelle bezüglich eines Kurbelgehäuses und/oder eines Zylinderkopfs der Brennkraftmaschine, insbesondere zur Lagerung an dem Zylinderkurbelgehäuse beziehungsweise dem Zylinderkopf, ist der wenigstens eine Lagerbock vorgesehen. Dieser ist beispielsweise zumindest bereichsweise einstückig und/oder materialeinheitlich mit dem Zylinderkurbelgehäuse beziehungsweise dem Zylinderkopf ausgestaltet. Der Lagerbock dient der drehbeweglichen Lagerung der Nockenwelle, insbesondere also einer Radiallagerung. Um zudem die Nockenwelle in axialer Richtung festzulegen, ist das Axiallagerelement vorgesehen, das in eine Axiallagernut des Lagerbocks eingreift.

Aus dem Stand der Technik ist beispielsweise die Druckschrift DE 10 2012 016 674 A1 bekannt. Diese betrifft einen Ventiltrieb einer Brennkraftmaschine, der mindestens eine, insbesondere als Hohlwelle ausgebildete Grundnockenwelle aufweist, auf der drehfest und axial verlagerbar mindestens ein Nockenträger vorgesehen ist, wobei die Grundnockenwelle einen wenigstens bereichsweise in einem teilbaren Lager, insbesondere Gleitlager, angeordneten Lagersitz aufweist. Dabei ist ein Lagerring vorgesehen, der in radialer Richtung sowohl in eine Wellenausnehmung der Grundnockenwelle als auch in eine Lagerausnehmung des Lagers eingreift.

Weiterhin sind aus dem Stand der Technik die Druckschriften DE 10 2012 016 672 A1, DE 10 2006 036 851 A1 und DE 10 2013 205 129 A1 bekannt.

Es ist nun Aufgabe der Erfindung, eine Brennkraftmaschine vorzuschlagen, welche gegenüber bekannten Brennkraftmaschinen Vorteile aufweist, insbesondere über eine hervorragende Dauerbetriebsfestigkeit verfügt.

Dies wird erfindungsgemäß mit einer Brennkraftmaschine mit den Merkmalen des Anspruchs 1 erreicht. Dabei ist vorgesehen, dass der Stützkörper in Umfangsrichtung bis zu seinen freien Enden flächig an der Außenumfangsfläche der Nockenwelle anliegt. Grundsätzlich ist hierbei vorgesehen, dass das Axiallagerelement einen beidseitig eines Haltevorsprungs in Umfangsrichtung bis zur seinen freien Enden flächig an einer Außenumfangsfläche der Nockenwelle anliegenden Stützkörper aufweist, wobei der Haltevorsprung von dem Stützkörper ausgeht und in eine die Außenumfangsfläche durchgreifende Halteausnehmung eingreift, sodass das Axiallagerelement drehfest mit der Nockenwelle verbunden ist, wobei der Stützkörper in eine in Umfangsrichtung bezüglich der Drehachse umlaufende Axiallagernut des Lagerbocks eingreift.

Das Axiallagerelement weist also zumindest den Stützkörper sowie den Haltevorsprung auf. Der Stützkörper ist derart ausgestaltet, dass er an der Außenumfangsfläche der Nockenwelle anliegt, insbesondere in Umfangsrichtung durchgehend. Der Stützkörper weist insoweit wenigstens eine Innenumfangsfläche auf, welche vollflächig, also beispielsweise in Umfangsrichtung und/oder in axialer Richtung durchgehend, an der Außenumfangsfläche der Nockenwelle anliegt. Die Außenumfangsfläche ist vorzugsweise zylindrisch, insbesondere kreiszylindrisch. Sie weist dabei besonders bevorzugt einen Durchmesser auf, welcher einem Maximaldurchmesser der Nockenwelle entspricht. Unter dem Maximaldurchmesser der Nockenwelle ist der in axialer Richtung entlang der Drehachse der Nockenwelle vorliegende größte Durchmesser zu verstehen.

Vorzugsweise liegt also der Stützkörper des Axiallagerelements an einem ungeschlitzten Bereich der Außenumfangsfläche der Nockenwelle an. Insbesondere greift der Stützkörper in radialer Richtung nicht in die Nockenwelle ein. Mit einer derartigen Ausgestaltung kann die unvorteilhafte Kerbwirkung eines Schlitzes, der bei bekannten Ausführungsformen der Brennkraftmaschine in der Nockenwelle zur Aufnahme des Axiallagerelements beziehungsweise des Stützkörpers ausgebildet ist, vermieden werden.

Um den Stützkörper beziehungsweise das Axiallagerelement bezüglich der Nockenwelle in Umfangsrichtung festzusetzen, also drehfest mit dieser zu verbinden, ist der Haltevorsprung vorgesehen. Dieser erstreckt sich in radialer Richtung ausgehend von dem Stützkörper nach innen und greift dabei in die Halteausnehmung der Nockenwelle ein. Die Halteausnehmung weist dabei einen kreisrunden Querschnitt auf und ist soweit beispielsweise als Haltebohrung ausgestaltet. Die Halteausnehmung durchgreift die Außenumfangsfläche der Haltewelle. Der Stützkörper ist vorteilhafterweise derart ausgestaltet, dass er in Umfangsrichtung unmittelbar benachbart von der Halteausnehmung an der Außenumfangsfläche anliegt, besonders bevorzugt beidseitig der Halteausnehmung. Eine kraftübertragende beziehungsweise drehmomentübertragende Wirkverbindung zwischen der Nockenwelle und dem Axiallagerelement liegt vorzugsweise ausschließlich oder zumindest nahezu ausschließlich über den Haltevorsprung vor.

Um die Nockenwelle in axialer Richtung bezüglich des Lagerbocks festzusetzen, weist dieser die Axiallagernut auf, welche in Umfangsrichtung durchgehend ausgestaltet ist, und dabei vorzugsweise einen Nutgrund aufweist, welcher in Umfangsrichtung durchgehend denselben Abstand von der Drehachse aufweist. Die Axiallagernut weist in axialer Richtung gesehen vorzugsweise dieselben Abmessungen auf wie der Stützkörper oder ist allenfalls mit geringem Übermaß zu diesem ausgestaltet. Entsprechend ist der Stützkörper des Axiallagerelements um die Drehachse drehbar in der Axiallagernut gelagert und dabei in axialer Richtung im Wesentlichen festgesetzt, also ohne Spiel oder allenfalls mit geringem Spiel in dieser aufgenommen.

In einer weiteren Ausgestaltung der Erfindung ist vorgesehen, dass die Nockenwelle als Vollwelle oder als Hohlwelle ausgestaltet ist. Grundsätzlich sind beide Varianten realisierbar. Im Falle der Vollwelle besteht die Nockenwelle im Querschnitt gesehen aus massivem Material, weist also keinen Hohlraum auf. Liegt die Nockenwelle dagegen als Hohlwelle vor, so weist sie einen bezüglich der Drehachse vorzugsweise symmetrischen und mittig ausgebildeten Hohlraum auf, welcher besonders bevorzugt die Nockenwelle in axialer Richtung vollständig durchgreift. Mit der Ausgestaltung der Nockenwelle als Hohlwelle kann das Gewicht der Nockenwelle deutlich reduziert werden.

Aufgrund der vorstehend beschriebenen Axiallagerung der Nockenwelle ist die Realisierung der Nockenwelle als Hohlwelle problemlos möglich. Beispielsweise ist es dabei möglich, die Wandstärke der Hohlwelle, also deren Dicke in radialer Richtung, derart zu wählen, dass sie kleiner ist als die Abmessungen des Stützkörpers in radialer Richtung oder allenfalls geringfügig größer. Beispielsweise beträgt die Wandstärke der Hohlwelle bezogen auf die Abmessungen des Stützkörpers in radialer Richtung, insbesondere die maximalen Abmessungen in radialer Richtung, höchstens 50 %, höchstens 75 %, höchstens 100 %, höchstens 125 % oder höchstens 150 %.

In einer weiteren Ausgestaltung der Erfindung ist ein weiteres Axiallagerelement vorgesehen, das diametral gegenüberliegend des Axiallagerelements an der Nockenwelle angeordnet ist und mit einem weiteren Haltevorsprung in eine weitere Halteausnehmung der Nockenwelle zur Herstellung einer drehfesten Verbindung eingreift. Das weitere Axiallagerelement liegt insoweit zusätzlich zu dem vorstehend beschriebenen Axiallagerelement vor. Vorzugsweise sind das Axiallagerelement sowie das weitere Axiallagerelement als Gleichteile ausgeführt, sind also identisch. Dies ermöglicht eine deutliche Verringerung der Herstellungs- und Lagerkosten, weil die Anzahl der herzustellenden unterschiedlichen Teile reduziert wird.

Ebenso wie das Axiallagerelement besteht das weitere Axiallagerelement aus dem Stützkörper sowie dem Haltevorsprung, welche im Folgenden als weiterer Stützkörper sowie als weiterer Haltevorsprung bezeichnet werden. Der weitere Haltevorsprung greift in die weitere Halteausnehmung der Nockenwelle ein, um das weitere Axiallagerelement in Umfangsrichtung bezüglich der Nockenwelle festzusetzen. Die weitere Halteausnehmung ist vorzugsweise identisch ausgestaltet wie die Halteausnehmung, jedoch von dieser beabstandet angeordnet, beispielsweise in Umfangsrichtung. Insbesondere liegt die weitere Halteausnehmung der Halteausnehmung bezüglich der Drehachse gegenüber. Aufgrund der identischen Ausgestaltung des Axiallagerelements und des weiteren Axiallagerelements liegen sich diese insoweit diametral gegenüber.

Eine besonders bevorzugte Ausgestaltung der Erfindung sieht vor, dass das Axiallagerelement und das weitere Axiallagerelement die Nockenwelle in Umfangsrichtung gemeinsam vollständig umgreifen. Dabei liegt beispielsweise der Stützkörper in Umfangsrichtung gesehen sowohl auf einer ersten Seite als auch auf einer der ersten Seite gegenüberliegenden zweiten Seite an dem weiteren Axiallagerelement beziehungsweise dessen Stützkörper an. Der Stützkörper verfügt insoweit in Umfangsrichtung über zwei gegenüberliegende freie Enden. Dies ist analog für das weitere Axiallagerelement beziehungsweise den weiteren Stützkörper der Fall. Der Stützkörper liegt nun mit einem seiner freien Enden an einem der freien Enden des weiteren Stützkörpers sowie mit seinem anderen der freien Enden an dem anderen der freien Enden des weiteren Stützkörpers an.

Im Rahmen einer weiteren Ausgestaltung der Erfindung ist vorgesehen, dass die Halteausnehmung und die weitere Halteausnehmung diametral gegenüberliegend in der Nockenwelle vorliegen, insbesondere als die Nockenwelle vollständig durchgreifende gemeinsame Halteausnehmung ausgebildet sind. Sowohl die Halteausnehmung als auch die weitere Halteausnehmung können jeweils als Sackausnehmung beziehungsweise Sackbohrung vorliegen, welche in radialer Richtung bezüglich der Drehachse derart bemessen ist, dass sie den Stützkörper des jeweiligen Axiallagerelements gerade aufnehmen kann. Besonders bevorzugt ist die Halteausnehmung jedoch als Durchgangsausnehmung ausgeführt, welche die Nockenwelle in radialer Richtung vollständig durchgreift und insoweit gleichzeitig die Halteausnehmung und die weitere Halteausnehmung ausbildet. Die Halteausnehmung und die weitere Halteausnehmung liegen somit in Form der einzigen gemeinsamen Halteausnehmung vor.

In einer weiteren Ausgestaltung der Erfindung ist vorgesehen, dass der Stützkörper teilkreisförmig und/oder der Haltevorsprung im Querschnitt rund ist. Im Querschnitt bezüglich der Drehachse gesehen umgreift der Stützkörper die Nockenwelle in Umfangsrichtung zumindest teilweise. Er ist insoweit teilkreisförmig ausgestaltet und umgreift in Umfangsrichtung wenigstens 10 %, wenigstens 20 %, wenigstens 30 %, wenigstens 40 %, wenigstens 45 %, wenigstens 47,5 % oder wenigstens 50 % der Nockenwelle. Zusätzlich oder alternativ weist der Haltevorsprung den runden Querschnitt auf, ist also bezüglich seiner Längsmittelachse rund.

Schließlich kann in einer weiteren bevorzugten Ausgestaltung der Erfindung vorgesehen sein, dass sich der Stützkörper und/oder der weitere Stützkörper in Richtung seiner freien Enden verjüngt. Wie bereits vorstehend erläutert, weisen der Stützkörper und der weitere Stützkörper jeweils zwei in Umfangsrichtung gegenüberliegende freie Enden auf. Die Abmessungen des Stützkörpers beziehungsweise des weiteren Stützkörpers in axialer Richtung und/oder in radialer Richtung können nun in Richtung des jeweiligen freien Endes kleiner werden. Während das Verjüngen an dem jeweiligen freien Ende in axialer Richtung vorzugsweise beidseitig vorgesehen ist, liegt das Verjüngen in radialer Richtung vorzugsweise lediglich auf der in radialer Richtung außenliegenden Seite des Stützkörpers beziehungsweise des weiteren Stützkörpers vor. Somit ist gewährleistet, dass der jeweilige Stützkörper auch im Bereich seines freien Endes, insbesondere über seine gesamte Erstreckung in Umfangsrichtung, an der Nockenwelle beziehungsweise deren Außenumfangsfläche anliegt.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Querschnittsdarstellung durch einen Bereich einer Brennkraftmaschine, sowie
- Figur 2: ein Axiallagerelement zur Axiallagerung einer Nockenwelle der Brennkraftmaschine.

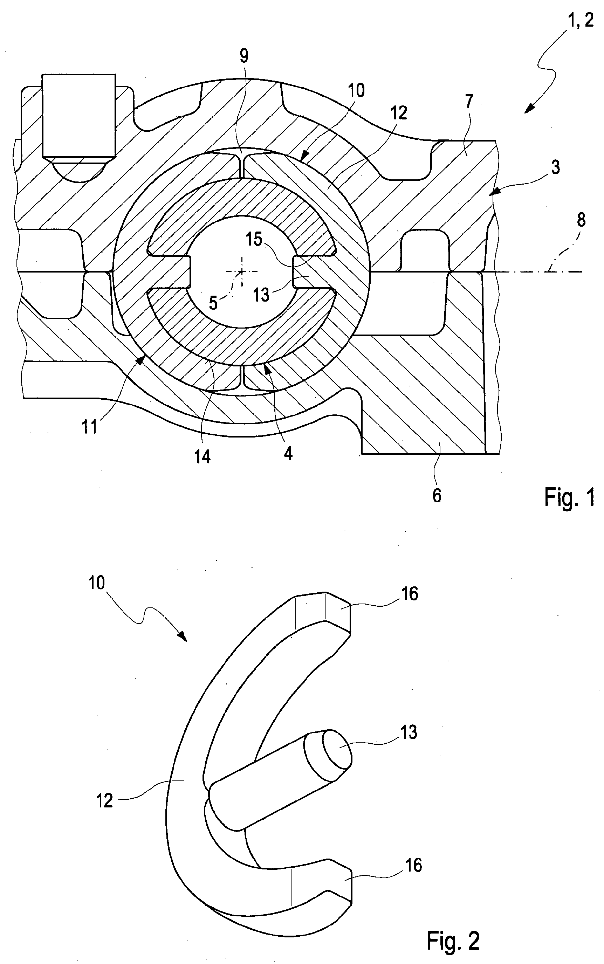

Die Figur 1 zeigt eine Querschnittsdarstellung durch einen Bereich einer Brennkraftmaschine 1, insbesondere durch einen Bereich eines Zylinderkopfs 2 der Brennkraftmaschine 1. Zu erkennen ist ein Lagerbock 3, der zur Lagerung einer Nockenwelle 4 vorgesehen ist. Die Nockenwelle 4 ist dabei mittels des Lagerbocks 3 bezüglich einer Drehachse 5 drehbar gelagert. Der Lagerbock 3 ist mehrteilig ausgestaltet und weist vorzugsweise ein Lagerbockgestell 6 sowie einen Lagerbockdeckel 7 auf. Diese liegen entlang einer Trennebene 8 aneinander an, wobei die Trennebene 8 vorzugsweise die Nockenwelle 4 mittig schneidet und insoweit durch die Drehachse 5 verläuft. Der Lagerbock 3 weist eine Axiallagernut 9 auf, in die ein Axiallagerelement 10 sowie ein weiteres Axiallagerelement 11 eingreifen. Nachfolgend wird lediglich auf das Axiallagerelement 10 eingegangen, das Axiallagerelement 11 ist jedoch identisch zu dem Axiallagerelement 10 ausgestaltet.

Das Axiallagerelement 10 weist einen Stützkörper 12 sowie einen von diesem ausgehenden Haltevorsprung 13 auf. Der Stützkörper 12 liegt in Umfangsrichtung vorzugsweise durchgehend an einer Außenumfangsfläche 14 der Nockenwelle 4 an. In axialer Richtung benachbart beziehungsweise unmittelbar benachbart zu dem Axiallagerelement 10 weist die Nockenwelle 4 denselben Durchmesser auf wie im Bereich ihrer Außenumfangsfläche 14. Es ist insoweit keine Nut zur Aufnahme des Axiallagerelements 10 vorgesehen. Der Haltevorsprung 13 greift in eine Halteausnehmung 15 ein, welche vorzugsweise eine Wandung der Nockenwelle 4, welche in dem hier dargestellten Ausführungsbeispiel als Hohlwelle vorliegt, vollständig durchgreift, also in einen zentralen Hohlraum der Nockenwelle 4 einmündet. Vorzugsweise erstreckt sich auch der Haltevorsprung 13 in radialer Richtung in diese zentrale Ausnehmung hinein.

Die Figur 2 zeigt eine Detaildarstellung des Axiallagerelements 10, wobei das Axiallagerelement 11 identisch aufgebaut ist. Es wird deutlich, dass der Stützkörper 12 im Wesentlichen teilkreisförmig ist, während der Haltevorsprung 13 bezüglich seiner Längsmittelachse im Querschnitt rund ist. Der Stützkörper 12 kann sich in Richtung seiner freien Enden 16 verjüngen, wobei dies insbesondere in axialer Richtung vorgesehen ist. Zusätzlich oder alternativ kann ein Verjüngen in radialer Richtung erfolgen, wobei eine derartige Verjüngung besonders bevorzugt lediglich auf der in radialer Richtung außenliegenden Seite des Stützkörpers 12 realisiert ist. Entsprechend kann der Stützkörper 12 beidseitig des Haltevorsprungs 13 in Umfangsrichtung bis hin zu seinen freien Enden 16 an der Nockenwelle 4 flächig anliegen.

## Patentansprüche

1. Brennkraftmaschine (1) mit wenigstens einer Nockenwelle (4) sowie einem Lagerbock (3) zur drehbeweglichen Lagerung der Nockenwelle (4) um eine Drehachse (5), wobei zur Axiallagerung der Nockenwelle (4) ein Axiallagerelement (10) vorgesehen ist, das in eine Axiallagernut (9) des Lagerbocks (3) eingreift, wobei das Axiallagerelement (10) einen beidseitig eines Haltevorsprungs (13) vorliegenden Stützkörper (12) aufweist, wobei der Haltevorsprung (13) von dem Stützkörper (12) ausgeht und in eine eine Außenumfangsfläche (14) der Nockenwelle (4) durchgreifende Halteausnehmung (15) eingreift, sodass das Axiallagerelement (10) drehfest mit der Nockenwelle (4) verbunden ist, wobei der Stützkörper (12) in die in Umfangsrichtung bezüglich der Drehachse (5) umlaufende Axiallagernut (9) des Lagerbocks (3) eingreift, **dadurch gekennzeichnet, dass** der Stützkörper (12) in Umfangsrichtung bis zu seinen freien Enden (16) flächig an der Außenumfangsfläche (14) der Nockenwelle (4) anliegt.

2. Brennkraftmaschine nach Anspruch 1, **gekennzeichnet durch** ein weiteres Axiallagerelement (11), das diametral gegenüberliegend des Axiallagerelements (10) der Nockenwelle (4) angeordnet ist und mit einem weiteren Haltevorsprung in eine weitere Halteausnehmung der Nockenwelle (4) zur Herstellung einer drehfesten Verbindung eingreift.

3. Brennkraftmaschine nach Anspruch 2, **dadurch gekennzeichnet, dass** das Axiallagerelement (10) und das weitere Axiallagerelement (11) die Nockenwelle (4) in Umfangsrichtung gemeinsam vollständig umgreifen.

4. Brennkraftmaschine nach Anspruch 2 oder 3, **dadurch gekennzeichnet, dass** die Halteausnehmung (15) und die weitere Halteausnehmung diametral gegenüberliegend in der Nockenwelle (4) vorliegen.

5. Brennkraftmaschine nach Anspruch 4, **dadurch gekennzeichnet, dass** die Halteausnehmung (15) und die weitere Halteausnehmung als die Nockenwelle (4) vollständig durchgreifende gemeinsame Halteausnehmung ausgebildet sind.

6. Brennkraftmaschine nach einem der vorhergehenden Ansprüche, **dadurch gekennzeichnet, dass** der Stützkörper (12) teilkreisförmig und/oder der Haltevorsprung (13) im Querschnitt rund ist.

7. Brennkraftmaschine nach einem der Ansprüche 2 bis 6, **dadurch gekennzeichnet, dass** sich der Stützkörper (12) und/oder ein weiterer Stützkörper des weiteren Axiallagerelements (11) in Richtung seiner freien Enden (16) verjüngt.

## Claims

1. Internal combustion engine (1) having at least one camshaft (4) and a bearing block (3) for the rotational bearing of the camshaft (4) about a rotational axis (5), wherein for the axial bearing of the camshaft (4) is provided an axial bearing element (10) which engages in an axial bearing groove (9) of the bearing block (3), wherein the axial bearing element (10) has a support body (12) present on both sides of a retaining projection (13), wherein the retaining projection (13) extends out of the support body (12) and engages in a retaining recess (15) engaging through an outer circumferential surface (14) of the camshaft (4), such that the axial bearing element (10) is connected non-rotationally with the camshaft (4), wherein the support body (12) engages into the axial bearing groove (9), surrounding in circumferential direction with respect to the rotational axis (5), of the bearing block (3), **characterised in that** the support body (12) in circumferential direction until its free ends (16) lies flat on the outer circumferential surface (14) of the camshaft (4).

2. Internal combustion engine according to claim 1, **characterised by** a further axial bearing element (11) which is disposed diametrically opposite to the axial bearing element (10) of the camshaft (4) and engages with a further retaining projection in a further retaining recess of the camshaft (4) to form a non-rotational connection.

3. Internal combustion engine according to claim 2, **characterised in that** the axial bearing element (10) and the further axial bearing element (11) together completely enclose the camshaft (4) in circumferential direction.

4. Internal combustion engine according to claim 2 or 3, **characterised in that** the retaining recess (15) and the further retaining recess lie diametrically opposing in the camshaft (4).

5. Internal combustion engine according to claim 4, **characterised in that** the retaining recess (15) and the further retaining recess are formed as a shared retaining recess engaging completely through the camshaft (4).

6. Internal combustion engine according to any of the preceding claims, **characterised in that** the support body (12) is partially circular and/or the retaining projection (13) is circular in cross-section.

7. Internal combustion engine according to any of claims 2 to 6, **characterised in that** the support body (12) and/or a further support body of the further axial bearing element (11) tapers in the direction of its free ends (16).

## Revendications

1. Moteur à combustion interne (1) avec au moins un arbre à cames (4) ainsi qu'un bloc de support (3) servant à monter de manière mobile en rotation l'arbre à cames (4) autour d'un axe de rotation (5), dans lequel est prévu, aux fins du montage axial de l'arbre à cames (4), un élément de support axial (10), qui vient en prise avec une rainure de support axial (9) du bloc de support (3), dans lequel l'élément de support axial (10) présente un corps d'appui (12) présent de part et d'autre d'une saillie de maintien (13), dans lequel la saillie de maintien (13) part du corps d'appui (12) et vient en prise avec un évidement de maintien (15) traversant une face périphérique extérieure (14) de l'arbre à cames (4) de sorte que l'élément de support axial (10) est relié de manière solidaire en rotation à l'arbre à cames (4), dans lequel le corps d'appui (12) vient en prise avec la rainure de support axial (9) du bloc de support (3) circulaire dans la direction périphérique par rapport à l'axe de rotation (5), **caractérisé en ce que** le corps d'appui (12) repose, dans la direction périphérique, jusqu'à ses extrémités libres (16), à plat au niveau de la face périphérique extérieure (14) de l'arbre à cames (4).

2. Moteur à combustion interne selon la revendication 1, **caractérisé par** un autre élément de support axial (11), qui est disposé de manière diamétralement opposée à l'élément de support axial (10) de l'arbre à cames (4) et vient en prise, par une autre saillie de maintien, avec un autre évidement de maintien de l'arbre à cames (4) pour établir une liaison solidaire en rotation.

3. Moteur à combustion interne selon la revendication 2, **caractérisé en ce que** l'élément de support axial (10) et l'autre élément de support axial (11) entourent conjointement en totalité l'arbre à cames (4) dans la direction périphérique.

4. Moteur à combustion interne selon la revendication 2 ou 3, **caractérisé en ce que** l'évidement de maintien (15) et l'autre évidement de maintien sont présents de manière diamétralement opposée dans l'arbre à cames (4).

5. Moteur à combustion interne selon la revendication 4, **caractérisé en ce que** l'évidement de maintien (15) et l'autre évidement de maintien sont réalisés sous la forme d'un évidement de maintien commun traversant en totalité l'arbre à cames (4).

6. Moteur à combustion interne selon l'une quelconque des revendications précédentes, **caractérisé en ce que** le corps d'appui (12) est en forme de cercle partiel et/ou la saillie de maintien (13) est ronde dans la section transversale.

7. Moteur à combustion interne selon l'une quelconque des revendications 2 à 6, **caractérisé en ce que** le corps d'appui (12) et/ou un autre corps d'appui de l'autre élément de support axial (11) se rétrécit en direction de ses extrémités libres (16).
